# EUROPEAN PATENT SPECIFICATION

(11) **EP 3 173 631 B1**
(45) Date of publication and mention of the grant of the patent: **13.10.2021**
(21) Application number: 15196081.2
(22) Date of filing: 24.11.2015
(51) Int. Cl.: F04D 29/54, F04D 29/60, F04D 29/42, F04D 29/44, F04D 29/66, F16L 43/00, F15D 1/04, F16L 25/14, F04D 13/16

(54) **INTAKE DEVICE FOR A VERTICAL PUMP AND ARRANGEMENT THEREWITH**
ANSAUGVORRICHTUNG FÜR EINE VERTIKALE PUMPE SOWIE ANORDNUNG DAMIT
DISPOSITIF D'ADMISSION POUR POMPE VERTICALE ET INSTALLATION LE COMPRENANT

(43) Date of publication of application: 31.05.2017
(73) Proprietor: Grundfos Holding A/S, 8850 Bjerringbro (DK)
(72) Inventor: Park, Tae Su, Gwangju, 62337 (KR); Lee, Sun Jin, Gwangju, 61657 (KR); Kim, Yong Chul, Gwangju, 62012 (KR)
(74) Representative: Patentanwälte Vollmann Hemmer Lindfeld Partnerschaft mbB

(56) References cited:
- US-A- 3 910 715
- US-A1- 2009 026 761
- US-B2- 8 177 500

## Description

The invention relates to an intake device for a vertical pump being an axial pump or a semi-axial pump and to an arrangement, comprising said intake device, a fluid reservoir and at least one vertical pump whose suction branch is in flow connection with the interior of the fluid reservoir via the intake device.

Intake devices are mainly used in connection with vertical pumps which transport large quantities of a fluid like water from a fluid reservoir to a level being higher than the fluid level in the fluid reservoir. The intake device is provided to create a homogenous flow of the fluid at the upstream side of a suction branch of the vertical pump. Mainly, but not exclusively such intake devices are used when the fluid reservoir is a running water like a river in which a turbulent flow and vortexes are present.

Such an intake device is described in US 8,177,500 B2. This intake device forms a flow channel from a vertically aligned orifice at an inlet section to a horizontally aligned orifice at an outlet section which is connected to an inlet of a vertical pump. The inlet section is aligned horizontally whereas the outlet section forms a bend into a vertical direction. The cross section of the inlet section is rectangular whereas the cross section of the outlet section is nine-sided. The inlet section is divided into two portions namely into an upstream portion which has a decreasing cross section and a downstream portion having a constant cross section. Although the intake device should provide a steady and uniform flow at the inlet of the pump it has the disadvantage that it is comparatively large and therefore requires a lot of space. Thus, this intake device cannot be directly placed in relative small fluid reservoirs respectively can only be placed in a fluid reservoir which provides a sufficiently large installation area for the intake device.

US 3910715 A and US 2009/026761A1 both disclose elbow-shaped intake devices with a flow channel having an area with an elliptical cross section, and a mounting flange radially surrounding the fluid outlet for mounting a pump.

It is one object of the invention to design an intake device for a vertical pump which firstly creates a homogenous flow of the fluid at the upstream side of a suction branch of the vertical pump, and additionally requires considerably less space than the intake devices known from prior art. A further object of the invention consists in providing an arrangement, comprising a fluid reservoir and at least one vertical pump whose suction branch is in flow connection with the interior of the fluid reservoir via an intake device.

The sub-object of the invention relating to the intake device is solved by an intake device for a vertical pump having the features specified in claim 1 whereas the sub-object of the invention relating to the arrangement is solved by an arrangement having the features specified in claim 12. Advantageous further developments of the intake device according to claim 1 and advantageous further developments of the arrangement according to claim 12 are obtained from the relevant subclaims, the following description and the drawings.

The intake device according to the invention comprises a fluid inlet and a fluid outlet. The fluid outlet is aligned perpendicular to the fluid inlet. Preferably the cross section of the fluid inlet is aligned vertically and the cross section of the fluid outlet is aligned horizontally. The intake device further comprises a flow channel which connects the fluid inlet with the fluid outlet. The flow channel has a first section which directly follows the fluid inlet and a second section which follows to the first section and which leads to the fluid outlet. Thereby, the flow channel typically forms a bend.

The intake device according to the invention is specific in that the cross section of the flow channel in the area of its first section changes from a circular cross section at the fluid inlet to an elliptical cross section and that the cross section of the flow channel in the area of its second section changes from an elliptical cross section to a circular cross section at the fluid outlet, wherein the diameter of the fluid outlet is smaller than the diameter of the fluid inlet which means that the cross section of the flow channel decreases between the fluid inlet and the fluid outlet. It has become evident that the aforementioned geometric configuration of the flow channel on the one hand ensures a steady and uniform flow at the upstream side of a suction branch of a vertical pump which is arranged downstream of the intake device and on the other side provides the opportunity to create an intake device, which in comparison to the known intake devices can have significantly lower dimensions so that the intake device according to the invention can also be used in case there is only a restricted place for the intake device.

Preferably, the first section of the flow channel is designed in such a way that the major axis of the elliptical cross section is aligned normal to a plane which is defined by the middle axis of the fluid inlet and the middle axis of the fluid outlet, wherein the minor axis of the elliptical cross section is arranged in a plane which is defined by the middle axis of the fluid inlet and the middle axis of the fluid outlet. In this context, the major axis corresponds to the largest distance between antipodal points on the elliptical contour of the cross section whereas the minor axis which runs through the mid-point of the cross section is aligned perpendicular to the major axis.

The dimension of the elliptical cross section of the first section of the flow channel in direction of its major axis preferably increases with increasing distance from the fluid inlet. This embodiment also has a positive effect with respect to the flow conditions at the suction branch of a vertical pump being arranged downstream of the intake device.

Also with regard to optimal flow conditions on the upstream side of a suction branch of a vertical pump the dimension of the elliptical cross section of the first section of the flow channel in direction of its minor axis advantageously decreases with increasing distance from the fluid inlet of the intake device. In this context, it is a considerable benefit if the cross section as a whole decreases with increasing distance from the fluid inlet because this effects a gradual acceleration of the flow in the first section of the flow channel.

Also with regard to the desirable acceleration of the flow inside the intake device the diameter of the fluid inlet is smaller than the diameter of the fluid inlet of the intake device. Concerning this matter it preferably is intended that the diameter of the fluid outlet amounts 0,5 to 0,7 times of the fluid inlet of the intake device.

As already mentioned above, the geometric configuration of the flow channel of the intake device according to the invention makes it possible to create a very compact intake device without accepting any losses with respect to the performance of the intake device. Concerning the compact design of the intake device it is favored when the distance between a middle axis of the fluid outlet and the outer side of the fluid inlet amounts only 2 to 2,5 times of the diameter of the fluid inlet.

Further, with respect to a compact design of the intake device it is preferably intended that a maximum dimension of a housing part of the intake device which surrounds the first section of the flow channel in direction of the elliptical major axis of the flow channel amounts only 1,1 to 1,3 times of the diameter of the fluid inlet.

According to a further advantageous design, an outer side of the fluid outlet and a middle axis of the fluid inlet lie within a common plane. That means that the first section of the flow channel is slanted with respect to a middle axis of the fluid outlet. The benefit of this alignment of the first section of the flow channel is that the first section of the flow channel can be relatively long without having any impact on the dimensions of the intake device in direction of the middle axis of the fluid inlet.

Preferably, the intake device comprises a stand. This stand appropriately is provided at a side of the intake device which directly faces away from the fluid inlet whereby a bottom surface of said stand is aligned parallel to an outer side of the fluid inlet. Because the intake device is provided with a stand the intake device is capable to support the weight of a complete pump station being arranged downstream of the intake device so that no further means for supporting the pump station have to be provided.

According to the invention, the intake device comprises a mounting flange which radially surrounds the fluid outlet. This mounting flange is used primarily for the secure fixing of a pump or a structural element which forms a flow channel to a pump at the intake device.

Further, the intake device advantageously may also comprise a mounting flange which radially surrounds the fluid inlet. At this mounting flange several different structural elements may be fixed. For instance, in case the intake device is arranged outside of a fluid reservoir, a pipe providing a flow connection between the fluid reservoir and the fluid inlet of the intake device may be fixed to the mounting flange.

Especially, in case the intake device is arrange in a fluid reservoir in which a turbulent flow exists, preferably anti-vortex means are arranged on the upstream side of the fluid inlet. Here, the term "anti-vortex means" includes all means which calm down the flow at the fluid inlet of the intake device respectively which keep away vortexes from the fluid inlet of the intake device.

In order to inspect the interior of the intake device and in particular to inspect whether solid contaminants have accumulated in the flow channel of the intake device, advantageously an inspection hole being closed by a cover is formed at the housing of the intake device in an area in which the first section of the flow channel passes over into the second section of the flow channel. Preferably, the cover which closes the inspection hole is screwed to the housing of the intake device so that for a brief inspection of the flow channel the cover can easily be removed by releasing the screw connection between the housing and the cover.

To prevent larger solid parts from entering the flow channel of the intake device, preferably a grid is arranged on the upstream side of the fluid inlet of the intake device. The grid, for instance may be formed by bars which are arranged in front of the fluid inlet in an appropriate distance parallel to another.

The arrangement, which is also part of the invention, comprises an intake device as defined in claim 1, a fluid reservoir and at least one vertical pump. The fluid reservoir may be a natural water or a prefabricated tank filled with a fluid. The vertical pump generally may be any pump which discharges fluid in a vertical direction. A suction branch of the vertical pump is in flow connection with the interior of the fluid reservoir via the intake device.

According to a first preferred embodiment of the arrangement at least the intake device is arranged inside of the fluid reservoir. Here, it is self-evident that the intake device is arranged underneath the fluid level in the fluid reservoir. Depending on the kind of the vertical pump the vertical pump may be arranged both underneath and above the fluid level in the fluid reservoir. Due to the fact that the intake device can be very compact, the fluid reservoir has to provide only a relatively small installation area for the intake device.

Instead of an arrangement of the intake device inside of the fluid reservoir the intake advantageously may also be arranged outside of the fluid reservoir. That is to say, the intake device as well as the vertical pump may be arranged in dry installation. In this case the intake device may be directly or indirectly be connected to a fluid outlet of the fluid reservoir.

If the intake device is indirectly connected to a fluid outlet of the fluid reservoir preferably a pipe is mounted to the fluid inlet of the intake device wherein the pipe connects the intake device with the interior of the fluid reservoir. The pipe allows the arrangement of the vertical pump in a relatively large lateral distance of the fluid reservoir. Usefully, the pipe is connected to the fluid inlet of the intake device by a flange connection.

In case the intake device is provided with a pipe for connecting the intake device with the interior of the fluid reservoir, advantageously a shut-off valve is arranged in the pipe. The shut-off valve may be used to prevent the fluid of the fluid reservoir from entering the intake device and the vertical pump which for instance may be necessary in case the intake device and/or the vertical pump have to be serviced or repaired.

Preferably the vertical pump is an axial pump. Thus, the vertical pump preferred is a centrifugal pump and especially a propeller pump with one or more axial impellers. This pump optionally can be dry or wet installed.

According to a further preferred embodiment in connection with the use of an axial pump, the axial pump may be arranged inside a riser pipe which is flange mounted to the fluid outlet of the intake device. Via the riser pipe the fluid which is delivered by the axial pump is transported to a level, which is higher than the fluid level in the fluid reservoir. Usefully, the axial pump is arranged inside the riser pipe in such a way that at least the suction branch of the axial pump is arranged on a level which lies underneath the fluid level in the fluid reservoir.

In addition to the riser pipe also the axial pump is based on the mounting flange which surrounds the fluid outlet of the intake device. However, in contrast to the riser pipe, which is firmly connected to the mounting flange, the axial pump is only loosely installed on the mounting flange. Therefore, in order to prevent the axial pump from rotating around its middle axis which would occur because of the centrifugal forces during operation of the axial pump, advantageously means for positive form locking are arranged on the flange which surrounds the fluid outlet of the intake device. Typically, also the axial pump is provided with means for positive form locking which interact with the means for positive form locking being arranged on the flange. In the simplest case, the means for positive form locking of the axial pump are formed by protrusions which per se exist at the housing of the axial pump. The means for positive form locking of the flange protrude in axial direction of the fluid outlet of the intake device.

Simple and cost-effective the means for positive form locking preferably are formed by pins which engage into holes which are formed on the flange of the intake device and which are distributed around the circumference of the flange. Typically, the diameter of the holes corresponds with the diameter of the pins in their portion engaging the holes so that the pins at least are not movable in radial direction.

As an alternative to the use of an axial pump, preferably a semi-axial pump is used as a vertical pump. Such semi-axial pumps are particular suitable in case a fluid at a moderate pressure should be transported from an open fluid reservoir to a higher level.

In case a semi-axial pump is used, this semi-axial pump is supported by a bearing flange which is flange-mounted to the fluid inlet of the intake device. That means, that the bearing flange is firmly connected to the mounting flange which surrounds the fluid inlet of the intake device wherein the semi-axial pump is based on the end of the bearing flange which is opposed to the mounting flange of the intake device. The bearing flange forms an encapsulated fluid channel from the intake device to the suction branch of the semi-axial pump.

As the semi-axial pump in operation also tends to rotate because of the centrifugal forces, the bearing flange on its side which directly points away from the intake device comprises a ring flange on which means for positive form locking are arranged which protrude in the axial direction of the bearing flange and which prevent the semi-axial pump from rotating around its middle axis. Also in this case, the means for positive form locking preferably are formed by pins which engage into holes being formed at the ring flange of the bearing flange.

The invention will be hereinafter explained in greater detail based on some exemplary embodiments shown in the drawing. The respective views on the drawing have been schematically greatly simplified, wherein
- Fig. 1: presents a perspective view showing an intake device,
- Fig. 2: presents a sectional view of the intake device depicted on Fig. 1,
- Fig. 3: presents a top view of the intake device depicted on Fig. 1,
- Fig. 4: presents a detail from Fig. 1,
- Fig. 5: presents a front view showing an element depicted on Fig. 4,
- Fig. 6: presents a side view of the element depicted on Fig. 5,
- Fig. 7: presents a perspective view showing two elements depicted on Fig. 4,
- Fig. 8: presents a perspective view showing the elements depicted on Fig. 7 mounted together,
- Fig. 9: presents a sectional view showing an arrangement comprising the intake device depicted on Fig. 1,
- Fig. 10: presents a perspective view showing an element depicted on Fig. 9,
- Fig. 11: presents a sectional view showing a second arrangement comprising the intake device depicted on Fig. 1,
- Fig. 12: presents a sectional view showing a third arrangement comprising the intake device depicted on Fig. 1,
- Fig. 13: presents a sectional view showing an element depicted on Fig. 12,
- Fig. 14: presents a perspective view of the element depicted on Fig. 13,
- Fig. 15: presents a second perspective view of the element depicted on Fig. 13,
- Fig. 16: presents a sectional view showing a fourth arrangement comprising the intake device depicted on Fig. 1,
- Fig. 17: presents a sectional view showing an element depicted on Fig. 16,
- Fig. 18: presents a perspective view of the element depicted on Fig. 17,
- Fig. 19: presents a second perspective view of the element depicted on Fig. 17,
- Fig. 20: presents a sectional view showing a fifth arrangement comprising the intake device depicted on Fig. 1,
- Fig. 21: presents a detail of Fig. 20,
- Fig. 22: presents a perspective view of the arrangement depicted on Fig. 20 and
- Fig. 23: presents a perspective view of an element depicted on Fig. 20.

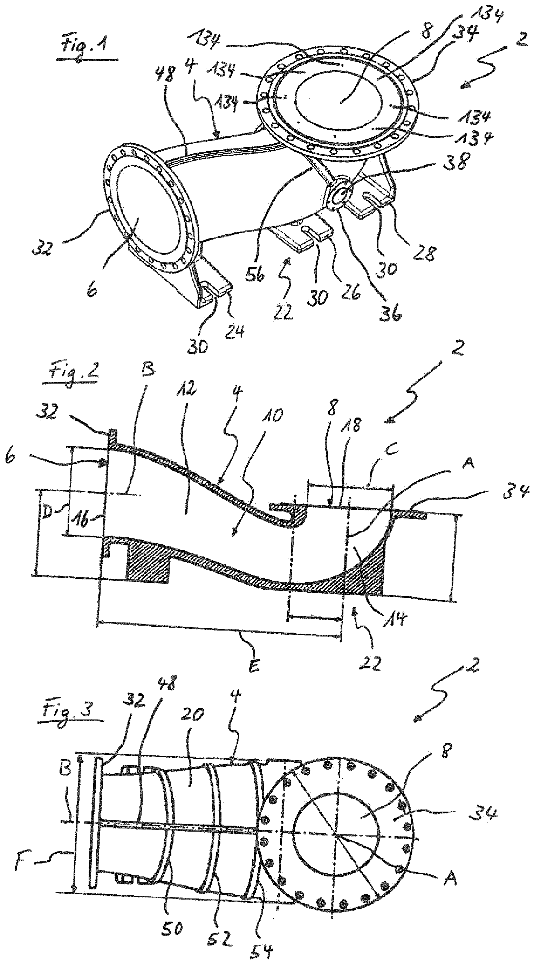

The intake device 2 depicted on Fig. 1 - 4 is used in combination with a vertical pump in order to create a homogeneous flow of the pumped fluid at the upstream side of a suction branch of the vertical pump. This intake device 2 comprises a housing 4 which is formed by casting. The housing 4 comprises a fluid inlet 6 and a fluid outlet 8 which are connected by a flow channel 10. Corresponding to a main flow direction in the vertical pump which follows to the fluid outlet 8 of the intake device 2, a middle axis A of the fluid outlet 8 is aligned vertically whereas a middle axis B of the Fluid inlet 6 of the intake device 2 is aligned horizontally. Both the fluid inlet 6 and the fluid outlet 8 have a circular cross section, wherein a diameter C of the fluid outlet 8 is smaller than a diameter D of the fluid inlet 6. In case of the intake device depicted on Fig. 1 - 4 the diameter C of the fluid outlet 8 amounts approximately 0,7- times of the diameter D of the fluid inlet 6.

As can best seen from Fig. 2, the flow channel 10 comprises a first section 12 which directly follows the fluid inlet 6 and a second section 14 which bends to the fluid outlet 8 of the intake device 2. In the area of the first section 12 the cross section of the flow channel 10 changes from a circular cross section at the fluid inlet 6 to an elliptical cross section. The cross section of the flow channel 10 in the area of its first section 12 changes in such a way that the major axis of the elliptical cross section is aligned normal to a plane which is defined by the middle axis B of the fluid inlet 6 and the middle axis A of the fluid outlet 8. Corresponding to that, the minor axis of the elliptical cross section is arranged in the plane which is defined by the middle axis B of the fluid inlet 6 and the middle axis A of the fluid outlet 8. The dimension of the elliptical cross section of the first section 12 of the flow channel 10 in direction of its major axis increases with increasing distance from the fluid inlet 6 wherein the dimension of the elliptical cross section of the first section 2 in direction of its minor axis decreases with increasing distance from the fluid inlet 6. Furthermore, the first section 12 of the flow channel 10 is slanted with respect to the middle axis A of the fluid outlet 8 in such a way that in direction of the middle axis A of the fluid outlet 8 the first section 12 of the flow channel 10 with increasing distance from the fluid inlet 6 moves away from the fluid outlet 8. In the area of its second section 14 the cross section of the flow channel 10 changes back from an elliptical cross section to a circular cross section at the fluid outlet 8.

From Fig. 2 it becomes apparent that a distance E between the middle axis A of the fluid outlet 8 and an outer side 16 of the fluid inlet 6 amounts approximately 2,5 times of the diameter D of the fluid inlet 6 and that an outer side 18 of the fluid outlet 8 and the middle axis B of the fluid inlet 6 lie within a common plane. From Fig. 3 it becomes apparent that a maximum dimension F of a housing part 20 of the intake device 2 which surrounds the first section 12 of the flow channel 10 in direction of the elliptical major axis of the flow channel 10 amounts approximately 1,3 times of the diameter D of the fluid inlet 6. Insofar, the intake device 2 is very compact.

In order to place the intake device 2 on a ground or fundament, the intake device 2 comprises a multipart stand 22 with three stand elements 24, 26 and 28 which are arranged on a side of the housing 4 which is opponent to the fluid outlet 8. Each of the stand elements 24, 26 and 28 is provided with a recess 30. The recesses 30 serve for the reception of screws whereby the intake device may be mounted on a ground or fundament. Both the fluid inlet 6 and the fluid outlet 8 are surrounded by a mounting flange 32 respectively 34. The significance of these mounting flanges 32 and 34 will be described below.

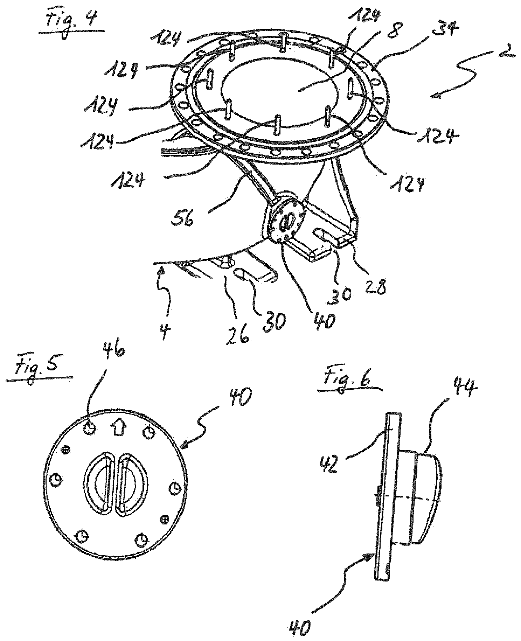

In the area in which the first section 12 meets the second section 14 of the flow channel 10 the housing 4 of the intake device 2 comprises a bulge 36. At this bulge 36 an inspection hole 38 is developed (Fig. 1). Through the inspection hole 38 the interior of the fluid channel 10 can be inspected. Otherwise the inspection hole 38 is closed by a cover 40 which is shown in Fig. 4 and in detail in Fig. 5 and 6. The cover 40 comprises a casted body which has a part 42 which, in case the cover 40 closes the inspection hole 38, is based on the outside of the bulge 36 and a part 44 which engages into the inspection hole 38. The cover 40 is mounted to the bulge 36 by way of a bolted fastening. For this purpose the part 42 of the cover 40 is provided with multiple holes 46 for receiving the bolts of the bolted fastening.

For stiffening the housing 4 of the intake device 2 reinforcing ribs 48, 50, 52, 54 and 56 are provided at the outside of the housing 4. Reinforcing ribs 48, 50, 52 and 54 are arranged at the housing part 20 wherein reinforcing rip 48 is aligned in the longitudinal direction of housing part 20 and wherein reinforcing rips 50, 52, 54 spaced from each other surround the housing part 20 in circumferential direction. The reinforcing rip 56 is arranged at the housing 4 in the area in which the first section 12 of the flow channel 10 passes over into the second section 14 of the flow channel 10.

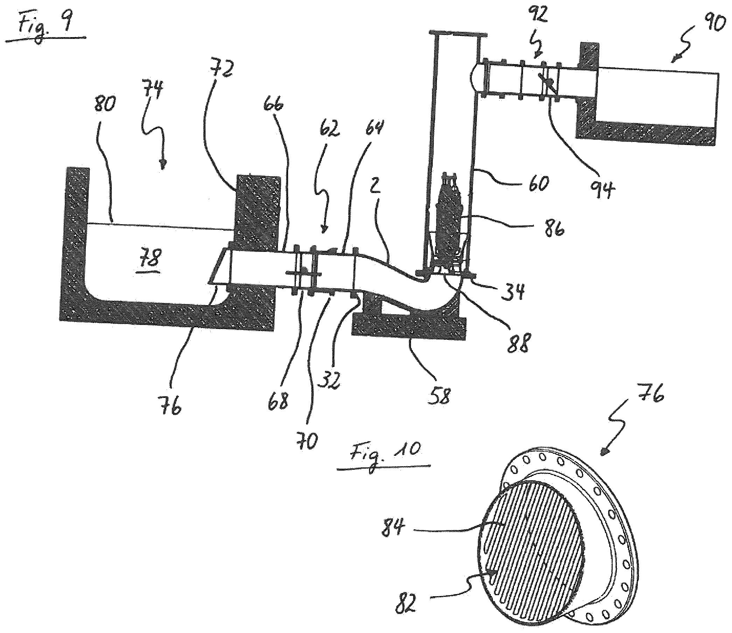

Reference is made now to Fig. 9. Fig. 9 shows an intake device 2 which is based on a fundament 58. A riser pipe 60 is fastened to the intake device 2 at the mounting flange 34 which surrounds the fluid outlet 8 of the intake device 2. At the mounting flange 32 which surrounds the fluid inlet 6 of the intake device 2 a piping system 62 is fastened. The piping system 62 consists of a pipe 64 and a pipe 66. Between the pipes 64 and 66 a butterfly valve 68 is arranged. In the area of pipe 64 an expansion joint 70 is provided. Pipe 66 penetrates a wall 72 of a prefabricated tank 74. At the inner side of the wall 72 an inlet flange 76 is mounted to the wall 72 where the pipe 66 leads into the tank 74. The tank 74 is filled with water 78 wherein the inlet flange 76 is arranged underneath a water level 80. As can be seen from Fig. 10 which shows the inlet flange 76 in detail, the inlet flange 76 is provided with a grid 82 which is formed by multiple steel bars 84 which are arranged parallel to one another. The grid 82 prevents lager solid parts being eventually in the tank 74 from entering the inlet flange 76 and all following components.

In the riser pipe 60 an axial pump 86 is arranged. With its suction branch 88 the axial pump 86 is based on the mounting flange 34 which surrounds the fluid outlet of the intake device 2. Via the riser pipe 60 the axial pump 86 discharges the water 78 from the tank 74 to a tank 90 which is arranged on a higher level than the tank 74. For this purpose, in an area of the riser pipe 60 which is opponent to the intake device 2 a piping system 92 is mounted at the riser pipe 60 which connects the riser pipe 60 with the tank 90. In order to prevent water being stored in tank 90 from flowing back into the riser pipe 60 the piping system 92 comprises a butterfly valve 94.

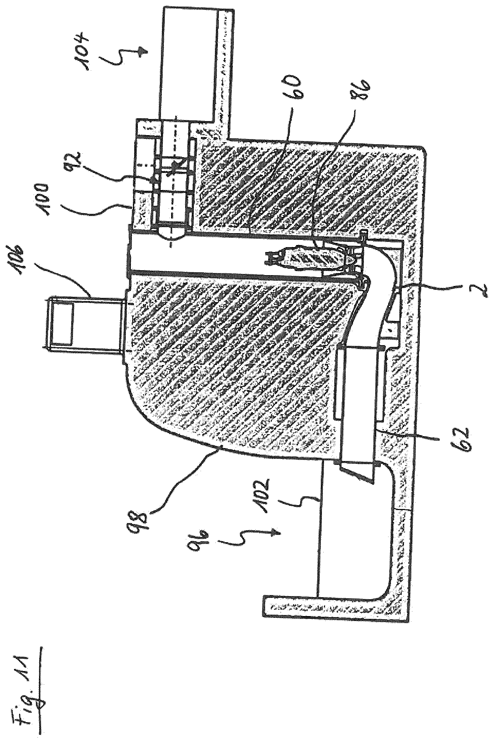

Reference is made now to Fig. 11. Fig. 11 shows a fluid reservoir in form of natural water 96. At one side the natural water 96 is restricted by a slope 98 which leads to a plane 100 which is higher than a water surface 102 in the natural water 96. At the plane 100 a second fluid reservoir 104 exists. Buried in the soil, a piping system 62 leads from the natural water 96 to an intake device 2 at which a riser pipe 60 is mounted which is connected with the fluid reservoir 104 via a piping system 92 with the fluid reservoir 104. Inside the riser pipe 60 an axial pump 86 is arranged which discharges the water from the natural water 96 to the fluid reservoir 104. The piping system 62, the intake device 2, the riser pipe 60, the axial pump 86 and the piping 92 are the same and are arranged in the same way as illustrated in Fig. 9 wherein in Fig. 11 also an electric panel 106 for controlling the axial pump 86 is depicted which is arranged on the plane 100.

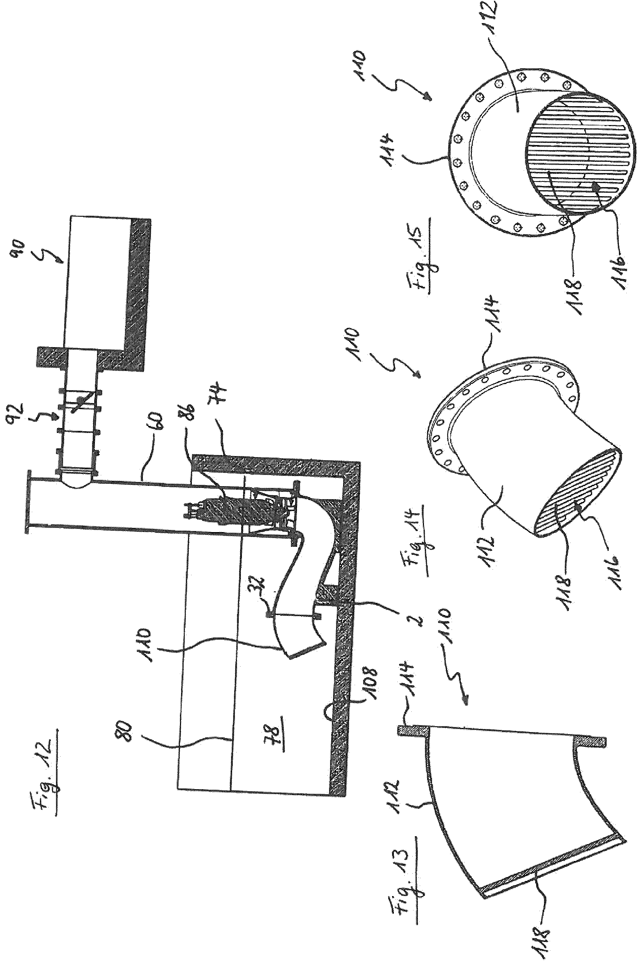

In Fig. 12 an intake device 2 is illustrated, which is positioned inside a prefabricated tank 74 filled with water 78. The intake device 2 stands on a bottom 108 of the tank 74 and is arranged underneath the water level 80. At the fluid outlet of the intake device 2 a riser pipe 60 is mounted which is connected with the tank 90 via a piping system 92. Inside the riser pipe 60 an axial pump 86 is arranged which discharges the water 78 from the tank 74 to the tank 90. The intake device 2, the riser pipe 60, the axial pump 86 and the piping 92 are the same and are arranged in the same way as illustrated in Fig. 9. In contrast to the arrangement illustrated in Fig. 9 a spout 110 is fastened at the mounting flange 32 which surrounds the fluid inlet of the intake device 2. Especially from Fig. 13, 14 and 15 which show the spout 110 in detail it becomes apparent that the spout 110 comprises a curved pipe 112 and a mounting flange 114 being arranged at one end of the pipe 112. In the area of the other end of the pipe 112 a grid 116 is arranged inside the pipe 112 which is formed by multiple steel bars 118. The spout 110 is arranged at the fluid inlet of the intake device 2 in such a way that its pipe 112 points in direction of the bottom 108 of the tank 74. Because of its curved form and because of its alignment the spout 110 forms an anti-vortex means.

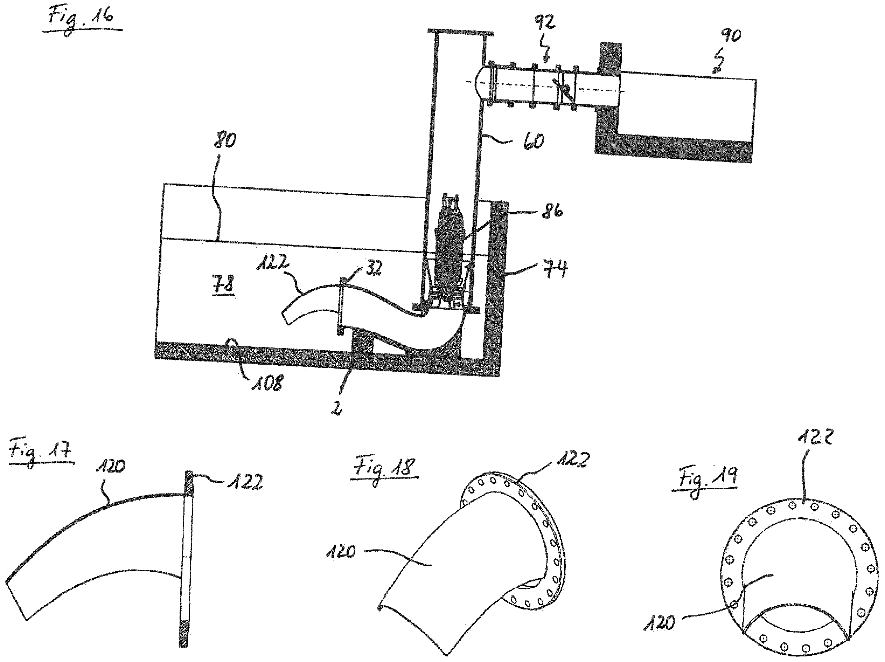

Fig. 16 shows mainly the same assembly as illustrated in Fig. 12. However, in Fig. 14 instead of a spout 110 a curved steel plate 120 is flange mounted to the mounting flange 32 which surrounds the fluid inlet of the intake device 2. The steel plate 120 functions like a floating baffle and a suction umbrella and also forms an anti-vortex means.

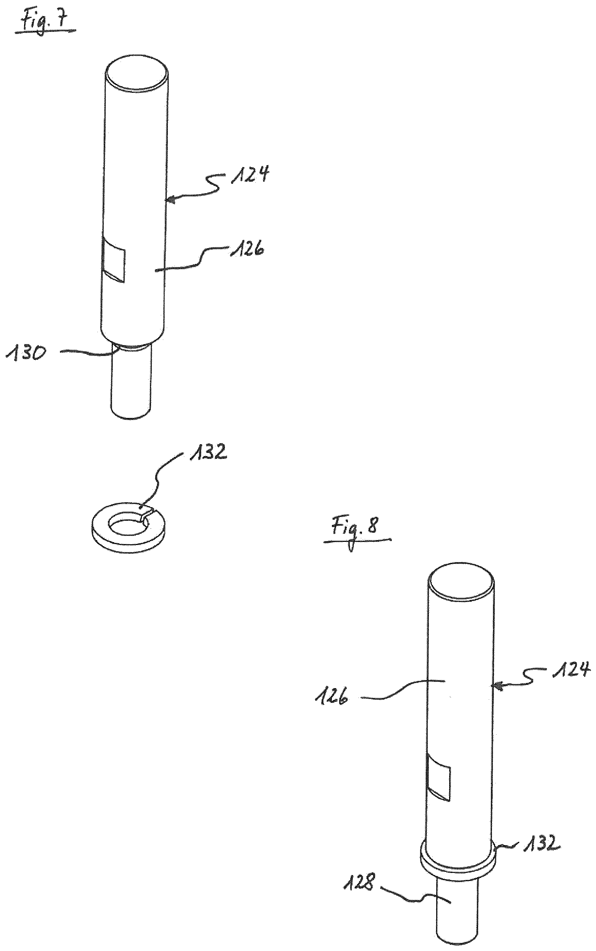

In the assemblies illustrated in Fig. 9, 11, 12 and 16 the axial pump 86 is, according to the invention, only loosely installed on top of the mounting flange 34 which surrounds the fluid outlet 8 of the intake device 2. In order to prevent the axial pump 86 from rotating when operated means for positive form locking are provided which block a rotation of the axial pump 86. This means for positive form locking are formed by pins 124 which are illustrated in Fig. 4, 7 and 8. Especially from Fig. 7 it becomes apparent that the pins 124 comprise two sections 126 and 128 with a varying diameter. Specifically in section 126 the diameter of the pin 124 is greater than in section 128. In the area in which the section 126 passes into the section 128 a recess 130 is formed at the circumference of the pin 124. In this recess 130 engages a spring washer 132. The pins 124 are arranged at an inner side of the mounting flange 34 which surrounds the fluid outlet 8 of the intake device 2 (Fig. 4). The pins 124 engage with their section 128 in holes 134 which are formed on the mounting flange 34 and which are distributed around the circumference of the mounting flange 34. When engaging in the holes 134 the pins 124 protrude in the axial direction of the fluid outlet 8.

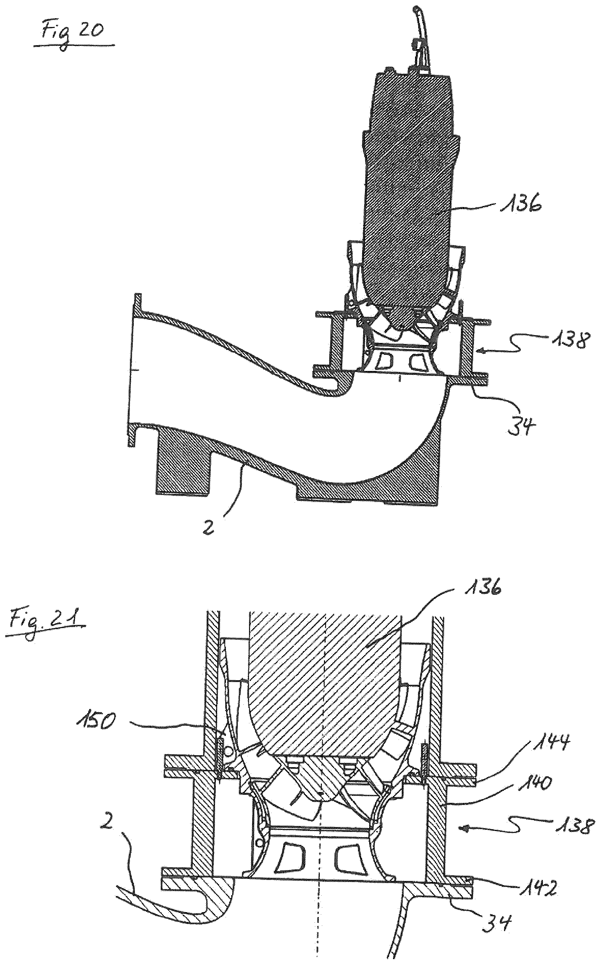

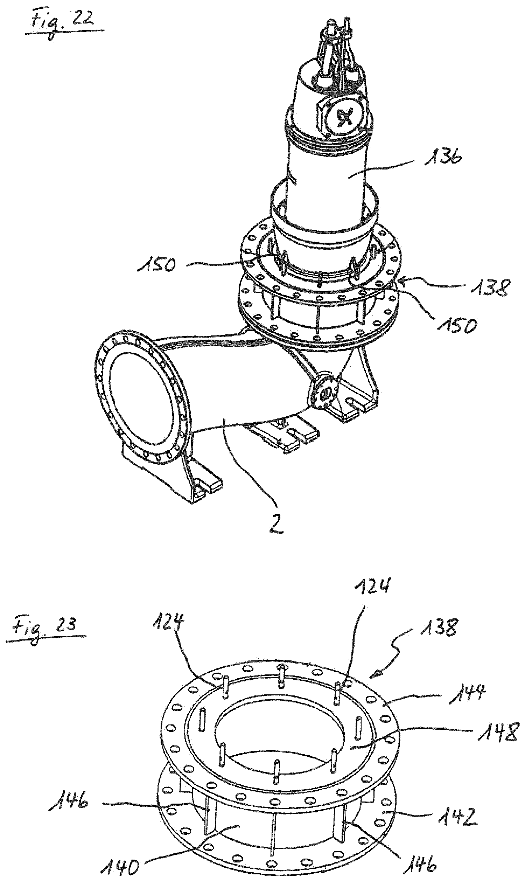

Reference is made now to Fig. 20 - 23. Fig. 20, 21 and 22 show an intake device 2 in combination with a semi-axial pump 136. This semi-axial pump 136 is supported by a bearing flange 138. The bearing flange 138 is formed by a pipe piece 140 which at one end is provided with a ring flange 142 and at the other end is provided with a ring flange 144. The bearing flange 138 is stiffened by several reinforcing ribs 146 which are arranged at the outer side of the pipe piece 140. Via its ring flange 142 the bearing flange 138 is fastened by bolts to the mounting flange 34 of the intake device 2.

The semi-axial pump 136 is only loosely installed on top of the ring flange 144 of the bearing flange 138. Therefore, also in this case means for positive form locking in form of pins 124 are provided which block a rotation of the semi-axial pump 136 when the semi-axial pump 136 is operated. The pins 124 engage in holes which are provided at an inner ring 148 of the ring flange 144 of the bearing flange 138 and interact with protrusions 150 which are provided at the semi-axial pump 136.

### Reference List

- 2 -: Intake device
- 4 -: Housing
- 6 -: Fluid inlet
- 8 -: Fluid outlet
- 10 -: Flow channel
- 12 -: Section
- 14 -: Section
- 16 -: Side
- 18 -: Side
- 20 -: Housing part
- 22 -: Stand
- 24 -: Stand element
- 26 -: Stand element
- 28 -: Stand element
- 30 -: Recess
- 32 -: Mounting flange
- 34 -: Mounting flange
- 36 -: Bulge
- 38 -: Inspection hole
- 40 -: Cover
- 42 -: Part
- 44 -: Part
- 46 -: Hole
- 48 -: Reinforcing rib
- 50 -: Reinforcing rib
- 52 -: Reinforcing rib
- 54 -: Reinforcing rib
- 56 -: Reinforcing rib
- 58 -: Fundament
- 60 -: Riser pipe
- 62 -: Piping system
- 64 -: Pipe
- 66 -: Pipe
- 68 -: Butterfly valve
- 70 -: Expansion joint
- 72 -: Wall
- 74 -: Tank
- 76 -: Inlet flange
- 78 -: Water
- 80 -: Water level
- 82 -: Grid
- 84 -: Steel bar
- 86 -: Axial pump
- 88 -: Suction branch
- 90 -: Tank
- 92 -: Piping system
- 94 -: Butterfly valve
- 96 -: Natural water
- 98 -: Slope
- 100 -: Plane
- 102 -: Water surface
- 104 -: Fluid reservoir
- 106 -: Electric panel
- 108 -: Bottom
- 110 -: Spout
- 112 -: Pipe
- 114 -: Mounting flange
- 116 -: Grid
- 118 -: Steel bar
- 120 -: Steel plate
- 122 -: Flange
- 124 -: Pin
- 126 -: Section
- 128 -: Section
- 130 -: Recess
- 132 -: Spring washer
- 134 -: Hole
- 136 -: Semi-axial pump
- 138 -: Bearing flange
- 140 -: Pipe piece
- 142 -: Ring flange
- 144 -: Ring flange
- 146 -: Reinforcing rib
- 148 -: Ring
- 150 -: Protrusion

- A -: Middle axis
- B -: Middle axis
- C -: Diameter
- D -: Diameter
- E -: Distance
- F -: Maximum dimension

## Claims

1. Intake device (2) for a vertical pump (86, 136) being an axial pump (86) or a semi-axial pump (136), comprising:
- a fluid inlet (6),
- a fluid outlet (8) which is aligned perpendicular to the fluid inlet (6) and
- a flow channel (10) which connects the fluid inlet (6) with the fluid outlet (8) and which comprises a first section (12) and a second section (14) wherein the first section (12) directly follows the fluid inlet (6) and wherein the second section (14) in which the direction of the flow channel (10) changes to the fluid outlet (8) by forming a bend,
wherein the cross section of the flow channel (10) in the area of its first section (12) changes from a circular cross section at the fluid inlet (6) to an elliptical cross section,
wherein the cross section of the flow channel (10) in the area of its second section (14) changes from an elliptical cross section to a circular cross section at the fluid outlet (8) and
wherein the diameter (C) of the fluid outlet (8) is smaller than the diameter (D) of the fluid inlet (6),
wherein the intake device (2) comprises a mounting flange (34) radially surrounding the fluid outlet (8) and configured for a loose installation of an axial pump (86) on top of the mounting flange (34), wherein means for positive form locking (124) are arranged on the mounting flange (34) and protrude in the axial direction of the fluid outlet (8) for preventing the axial pump (86) from rotating around its middle axis,
or
wherein the intake device (2) comprises a bearing flange (138) being flange-mounted to the fluid outlet (8) for supporting a semi-axial pump (136), wherein the bearing flange (138) on its side which directly points away from the intake device (2) comprises a ring flange (144), such that the semi-axial pump (136) is installed loose on top of the ring flange (144), wherein means for positive form locking (124) are arranged on said ring flange (144) which protrude in the axial direction of the bearing flange (138) for preventing the semi-axial pump (136) from rotating around its middle axis.

2. Intake device (2) according to claim 1, **characterized in that** the major axis of the elliptical cross section is aligned normal to a plane which is defined by the middle axis (B) of the fluid inlet (6) and the middle axis (A) of the fluid outlet (8) and the minor axis of the elliptical cross section is arranged in the plane which is defined by the middle axis (B) of the fluid inlet (6) and the middle axis (A) of the fluid outlet (8).

3. Intake device (2) according to claim 1 or 2, **characterized in that** the means for positive form locking are formed by pins (124) which engage into holes (134),
which are formed at the mounting flange (34) and which are distributed around the circumference of the mounting flange (34),
or
which are formed at the ring flange (144) of the bearing flange (138).

4. Intake device (2) according to any of the preceding claims, **characterized in that** the dimension of the elliptical cross section of the first section (12) of the flow channel (10) in direction of its major axis increases with increasing distance from the fluid inlet (6).

5. Intake device (2) according to any of the preceding claims, **characterized in that** the dimension of the elliptical cross section of the first section (12) of the flow channel (10) in direction of its minor axis decreases with increasing distance from the fluid inlet (6).

6. Intake device (2) according to any of the preceding claims, **characterized in that** the diameter (C) of the fluid outlet (8) amounts 0,5 to 0,7 times of the diameter (D) of the fluid inlet (6).

7. Intake device (2) according to any of the preceding claims, **characterized in that** the distance (E) between a middle axis (A) of the fluid outlet (8) and the outer side (16) of the fluid inlet (6) amounts 2 to 2,5 times of the diameter (D) of the fluid inlet (6).

8. Intake device (2) according to any of the preceding claims, **characterized in that** a maximum dimension (F) of a housing part (20) of the intake device (2) which surrounds the first section (12) of the flow channel (10) in direction of the elliptical major axis of the flow channel (10) amounts 1,1 to 1,3 times of the diameter (D) of the fluid inlet (6).

9. Intake device (2) according to any of the preceding claims, **characterized in that** an outer side (18) of the fluid outlet (8) and a middle axis (B) of the fluid inlet (6) lie within a common plane.

10. Intake device (2) according to any of the preceding claims, **characterized in that** the intake device (2) comprises a mounting flange (32) which radially surrounds the fluid inlet (6).

11. Intake device (2) according to any of the preceding claims, **characterized in that** an inspection hole (38) being closed by a cover (40) is formed at the housing (4) of the intake device (2) in an area in which the first section (12) of the flow channel (10) passes over into the second section (14) of the flow channel (10).

12. Arrangement, comprising a fluid reservoir (74, 96), an intake device (2) according to any of the claims 1 to 11, and at least one vertical pump (86, 136) whose suction branch is in flow connection with the interior of the fluid reservoir (74, 96) via the intake device (2).

13. Arrangement according to claim 12, **characterized in that** at least the intake device (2) is arranged inside of the fluid reservoir (74).

14. Arrangement according to claim 12, **characterized in that** the intake device (2) is arranged outside of the fluid reservoir (74, 96).

15. Arrangement according to claim 14, **characterized in that** a pipe is mounted to the fluid inlet (6) of the intake device (2) wherein said pipe connects the intake device (2) with the interior of the fluid reservoir.

16. Arrangement according to one of claims 12 to 15, **characterized in that** the vertical pump is an axial pump (86).

17. Arrangement according to claim 16, **characterized in that** the axial pump (86) is arranged inside a riser pipe (60) wherein said riser pipe (60) is flange-mounted to the fluid outlet (8) of the intake device (2).

18. Arrangement according to claim 16 or 17, **characterized in that** the means for positive form locking are formed by pins (124) which engage into holes (134) which are formed at the mounting flange (34) of the intake device (2) and which are distributed around the circumference of the mounting flange (34) of the intake device (2).

19. Arrangement according to one of claims 12 to 15 **characterized in that** the vertical pump is a semi-axial pump (136).

## Patentansprüche

1. Ansaugvorrichtung (2) für eine vertikale Pumpe (86, 136), die eine Axialpumpe (86) oder eine Halbaxialpumpe (136) ist, umfassend:
- einen Fluideinlass (6),
- einen Fluidauslass (8), der senkrecht mit dem Fluideinlass (6) verbunden ist, und
- einen Strömungskanal (10), der den Fluideinlass (6) mit dem Fluidauslass (8) verbindet und der einen ersten Abschnitt (12) und einen zweiten Abschnitt (14) umfasst, wobei der erste Abschnitt (12) dem Fluideinlass (6) direkt folgt und wobei sich in dem zweiten Abschnitt (14) die Richtung des Strömungskanals (10) durch Bildung einer Krümmung zu dem Fluidauslass (8) ändert,
wobei sich der Querschnitt des Strömungskanals (10) in dem Bereich seines ersten Abschnitts (12) von einem kreisförmigen Querschnitt am Fluideinlass (6) zu einem elliptischen Querschnitt ändert,
wobei sich der Querschnitt des Strömungskanals (10) in dem Bereich seines zweiten Abschnitts (14) von einem elliptischen Querschnitt zu einem kreisförmigen Querschnitt am Fluidauslass (8) ändert und
wobei der Durchmesser (C) des Fluidauslasses (8) kleiner ist als der Durchmesser (D) des Fluideinlasses (6),
wobei die Ansaugvorrichtung (2) einen Montageflansch (34) umfasst, der den Fluidauslass (8) radial umgibt und für eine lockere Installation einer Axialpumpe (86) an der Oberseite des Montageflansches (34) gestaltet ist,
wobei Mittel für einen Formschluss (124) an dem Montageflansch (34) angeordnet sind und in der Axialrichtung des Fluidauslasses (8) vorragen, um eine Drehung der Axialpumpe (86) um ihre Mittelachse zu verhindern,
oder
wobei die Ansaugvorrichtung (2) einen Lagerflansch (138) umfasst, der an den Fluidauslass (8) flanschmontiert ist, um eine Halbaxialpumpe (136) zu stützen, wobei der Lagerflansch (138) an seiner Seite, die direkt von der Ansaugvorrichtung (2) weg zeigt, einen Ringflansch (144) umfasst, sodass die Halbaxialpumpe (136) locker an der Oberseite des Ringflansches (144) installiert ist, wobei Mittel für einen Formschluss (124) an dem Ringflansch (144) angeordnet sind, die in der Axialrichtung des Lagerflansches (138) vorragen, um eine Drehung der Halbaxialpumpe (136) um ihre Mittelachse zu verhindern.

2. Ansaugvorrichtung (2) nach Anspruch 1, **dadurch gekennzeichnet, dass** die Hauptachse des elliptischen Querschnitts normal zu einer Ebene ausgerichtet ist, die durch die Mittelachse (B) des Fluideinlasses (6) und die Mittelachse (A) des Fluidauslasses (8) definiert ist, und die Nebenachse des elliptischen Querschnitts in der Ebene angeordnet ist, die durch die Mittelachse (B) des Fluideinlasses (6) und die Mittelachse (A) des Fluidauslasses (8) definiert ist.

3. Ansaugvorrichtung (2) nach Anspruch 1 oder 2, **dadurch gekennzeichnet, dass** die Mittel für einen Formschluss durch Stifte (124) gebildet sind, die in Löcher (134) eingreifen,
die an dem Montageflansch (34) gebildet sind und die um den Umfang des Montageflansches (34) verteilt sind, oder
die an dem Ringflansch (144) des Lagerflansches (138) gebildet sind.

4. Ansaugvorrichtung (2) nach einem der vorstehenden Ansprüche, **dadurch gekennzeichnet, dass** die Dimension des elliptischen Querschnitts des ersten Abschnitts (12) des Strömungskanals (10) in Richtung seiner Hauptachse mit zunehmendem Abstand von dem Fluideinlass (6) zunimmt.

5. Ansaugvorrichtung (2) nach einem der vorstehenden Ansprüche, **dadurch gekennzeichnet, dass** die Dimension des elliptischen Querschnitts des ersten Abschnitts (12) des Strömungskanals (10) in Richtung seiner Nebenachse mit zunehmendem Abstand von dem Fluideinlass (6) abnimmt.

6. Ansaugvorrichtung (2) nach einem der vorstehenden Ansprüche, **dadurch gekennzeichnet, dass** der Durchmesser (C) des Fluidauslasses (8) 0,5 bis 0,7 Mal der Durchmesser (D) des Fluideinlasses (6) ist.

7. Ansaugvorrichtung (2) nach einem der vorstehenden Ansprüche, **dadurch gekennzeichnet, dass** der Abstand (E) zwischen einer Mittelachse (A) des Fluidauslasses (8) und der Außenseite (16) des Fluideinlasses (6) 2 bis 2,5 Mal der Durchmesser (D) des Fluideinlasses (6) ist.

8. Ansaugvorrichtung (2) nach einem der vorstehenden Ansprüche, **dadurch gekennzeichnet, dass** eine maximale Dimension (F) eines Gehäuseteils (20) der Ansaugvorrichtung (2) der den ersten Abschnitt (12) des Strömungskanals (10) in Richtung der Hauptachse des Strömungskanals (10) umgibt, 1,1 bis 1,3 Mal der Durchmesser (D) des Fluideinlasses (6) ist.

9. Ansaugvorrichtung (2) nach einem der vorstehenden Ansprüche, **dadurch gekennzeichnet, dass** eine Außenseite (18) des Fluidauslasses (8) und eine Mittelachse (B) des Fluideinlasses (6) in einer gemeinsamen Ebene liegen.

10. Ansaugvorrichtung (2) nach einem der vorstehenden Ansprüche, **dadurch gekennzeichnet, dass** die Ansaugvorrichtung (2) einen Montageflansch (32) umfasst, der den Fluideinlass (6) radial umgibt.

11. Ansaugvorrichtung (2) nach einem der vorstehenden Ansprüche, **dadurch gekennzeichnet, dass** ein Überprüfungsloch (38), das nahe einer Abdeckung (40) liegt, an dem Gehäuse (4) der Ansaugvorrichtung (2) in einem Bereich gebildet ist, in dem der erste Abschnitt (12) des Strömungskanals (10) in den zweiten Abschnitt (14) des Strömungskanals (10) übergeht.

12. Anordnung, umfassend ein Fluidreservoir (74, 96), eine Ansaugvorrichtung (2) nach einem der Ansprüche 1 bis 11 und zumindest eine vertikale Pumpe (86, 136), deren Saugzweig über die Ansaugvorrichtung (2) in strömungstechnischer Verbindung mit dem Inneren des Fluidreservoirs (74, 96) ist.

13. Anordnung nach Anspruch 12, **dadurch gekennzeichnet, dass** zumindest die Ansaugvorrichtung (2) im Inneren des Fluidreservoirs (74) angeordnet ist.

14. Anordnung nach Anspruch 12, **dadurch gekennzeichnet, dass** die Ansaugvorrichtung (2) außerhalb des Fluidreservoirs (74, 96) angeordnet ist.

15. Anordnung nach Anspruch 14, **dadurch gekennzeichnet, dass** ein Rohr an dem Fluideinlass (6) der Ansaugvorrichtung (2) montiert ist, wobei das Rohr die Ansaugvorrichtung (2) mit dem Inneren des Fluidreservoirs verbindet.

16. Anordnung nach einem der Ansprüche 12 bis 15, **dadurch gekennzeichnet, dass** die vertikale Pumpe eine Axialpumpe (86) ist.

17. Anordnung nach Anspruch 16, **dadurch gekennzeichnet, dass** die Axialpumpe (86) im Inneren eines Steigrohrs (60) angeordnet ist, wobei das Steigrohr (60) an dem Fluidauslass (8) der Ansaugvorrichtung (2) flanschmontiert ist.

18. Anordnung nach Anspruch 16 oder 17, **dadurch gekennzeichnet, dass** die Mittel für einen Formschluss durch Stifte (124) gebildet sind, die in Löcher (134) eingreifen, die an dem Montageflansch (34) der Ansaugvorrichtung (2) gebildet sind und die um den Umfang des Montageflansches (34) der Ansaugvorrichtung (2) verteilt sind.

19. Anordnung nach einem der Ansprüche 12 bis 15, **dadurch gekennzeichnet, dass** die vertikale Pumpe eine Halbaxialpumpe (136) ist.

## Revendications

1. Dispositif d'admission (2) pour une pompe verticale (86, 136) qui est une pompe axiale (86) ou une pompe semi-axiale (136), comprenant :
- une entrée de fluide (6),
- une sortie de fluide (8) qui est alignée perpendiculairement à l'entrée de fluide (6) et
- un canal d'écoulement (10) qui relie l'entrée de fluide (6) à la sortie de fluide (8) et qui comprend une première section (12) et une seconde section (14) dans lequel la première section (12) suit directement l'entrée de fluide (6) et dans lequel la seconde section (14) dans laquelle la direction du canal d'écoulement (10) change vers la sortie de fluide (8) en formant un coude, dans lequel la coupe transversale du canal d'écoulement (10) dans la zone de sa première section (12) passe d'une coupe transversale circulaire au niveau de l'entrée de fluide (6) à une coupe transversale elliptique,
dans lequel la coupe transversale du canal d'écoulement (10) dans la zone de sa seconde section (14) passe d'une coupe transversale elliptique à une coupe transversale circulaire au niveau de la sortie de fluide (8) et
dans lequel le diamètre (C) de la sortie de fluide (8) est plus petit que le diamètre (D) de l'entrée de fluide (6),
dans lequel
le dispositif d'admission (2) comprend une bride de montage (34) entourant radialement la sortie de fluide (8) et configurée pour une installation lâche d'une pompe axiale (86) sur le dessus de la bride de montage (34),
dans lequel des moyens de verrouillage à complémentarité de formes (124) sont agencés sur la bride de montage (34) et font saillie dans la direction axiale de la sortie de fluide (8) pour empêcher la pompe axiale (86) de tourner autour de son axe médian,
ou
dans lequel le dispositif d'admission (2) comprend une bride de maintien (138) qui est montée par bride sur la sortie de fluide (8) pour supporter une pompe semi-axiale (136), dans lequel la bride de maintien (138) sur son côté qui pointe directement à l'opposé du dispositif d'admission (2) comprend une bride annulaire (144), de sorte que la pompe semi-axiale (136) est installée de manière lâche sur le dessus de la bride annulaire (144), dans lequel des moyens de verrouillage à complémentarité de formes (124) sont agencés sur ladite bride annulaire (144) qui fait saillie dans la direction axiale de la bride de maintien (138) pour empêcher la pompe semi-axiale (136) de tourner autour de son axe médian.

2. Dispositif d'admission (2) selon la revendication 1, **caractérisé en ce que** le grand axe de la coupe transversale elliptique est aligné d'une manière normale à un plan qui est défini par l'axe médian (B) de l'entrée de fluide (6) et l'axe médian (A) de la sortie de fluide (8) et le petit axe de la coupe transversale elliptique est agencé dans le plan qui est défini par l'axe médian (B) de l'entrée de fluide (6) et l'axe médian (A) de la sortie de fluide (8).

3. Dispositif d'admission (2) selon la revendication 1 ou 2, **caractérisé en ce que** les moyens de verrouillage à complémentarité de formes sont formés par des broches (124) qui viennent en prise dans des trous (134), qui sont formés au niveau de la bride de montage (34) et qui sont répartis autour de la circonférence de la bride de montage (34), ou
qui sont formés au niveau de la bride annulaire (144) de la bride de maintien (138).

4. Dispositif d'admission (2) selon l'une quelconque des revendications précédentes, **caractérisé en ce que** la dimension de la coupe transversale elliptique de la première section (12) du canal d'écoulement (10) dans une direction de son grand axe augmente avec une augmentation de distance depuis l'entrée de fluide (6).

5. Dispositif d'admission (2) selon l'une quelconque des revendications précédentes, **caractérisé en ce que** la dimension de la coupe transversale elliptique de la première section (12) du canal d'écoulement (10) dans une direction de son petit axe diminue avec une augmentation de distance depuis l'entrée de fluide (6).

6. Dispositif d'admission (2) selon l'une quelconque des revendications précédentes, **caractérisé en ce que** le diamètre (C) de la sortie de fluide (8) est de 0,5 à 0,7 fois le diamètre (D) de l'entrée de fluide (6).

7. Dispositif d'admission (2) selon l'une quelconque des revendications précédentes, **caractérisé en ce que** la distance (E) entre un axe médian (A) de la sortie de fluide (8) et le côté extérieur (16) de l'entrée de fluide (6) s'élève entre 2 et 2,5 fois le diamètre (D) de l'entrée de fluide (6).

8. Dispositif d'admission (2) selon l'une quelconque des revendications précédentes, **caractérisé en ce qu'**une dimension maximale (F) d'une partie de boîtier (20) du dispositif d'admission (2) qui entoure la première section (12) du canal d'écoulement (10) en direction du grand axe elliptique du canal d'écoulement (10) s'élève entre 1,1 et 1,3 fois le diamètre (D) de l'entrée de fluide (6).

9. Dispositif d'admission (2) selon l'une quelconque des revendications précédentes, **caractérisé en ce qu'**un côté extérieur (18) de la sortie de fluide (8) et un axe médian (B) de l'entrée de fluide (6) se trouvent à l'intérieur d'un plan commun.

10. Dispositif d'admission (2) selon l'une quelconque des revendications précédentes, **caractérisé en ce que** le dispositif d'admission (2) comprend une bride de montage (32) qui entoure radialement l'entrée de fluide (6).

11. Dispositif d'admission (2) selon l'une quelconque des revendications précédentes, **caractérisé en ce qu'**un trou d'inspection (38) qui est fermé par un couvercle (40) est formé au niveau du boîtier (4) du dispositif d'admission (2) dans une zone dans laquelle la première section (12) du canal d'écoulement (10) transite dans la seconde section (14) du canal d'écoulement (10).

12. Agencement, comprenant un réservoir de fluide (74, 96), un dispositif d'admission (2) selon l'une quelconque des revendications 1 à 11, et au moins une pompe verticale (86, 136) dont une branche d'aspiration est en connexion d'écoulement avec l'intérieur du réservoir de fluide (74, 96) via le dispositif d'admission (2).

13. Agencement selon la revendication 12, **caractérisé en ce qu'**au moins le dispositif d'admission (2) est agencé à l'intérieur du réservoir de fluide (74).

14. Agencement selon la revendication 12, **caractérisé en ce que** le dispositif d'admission (2) est agencé à l'extérieur du réservoir de fluide (74, 96).

15. Agencement selon la revendication 14, **caractérisé en ce qu'**un tuyau est monté sur l'entrée de fluide (6) du dispositif d'admission (2) dans lequel ledit tuyau relie le dispositif d'admission (2) avec l'intérieur du réservoir de fluide.

16. Agencement selon l'une des revendications 12 à 15, **caractérisé en ce que** la pompe verticale est une pompe axiale (86).

17. Agencement selon la revendication 16, **caractérisé en ce que** la pompe axiale (86) est agencée à l'intérieur d'un tuyau ascendant (60) dans lequel ledit tuyau ascendant (60) est monté par bride sur la sortie de fluide (8) du dispositif d'admission (2).

18. Agencement selon la revendication 16 ou 17, **caractérisé en ce que** les moyens de verrouillage à complémentarité de formes sont formés par des broches (124) qui viennent en prise dans des trous (134) qui sont formés au niveau de la bride de montage (34) du dispositif d'admission (2) et qui sont répartis autour de la circonférence de la bride de montage (34) du dispositif d'admission (2).

19. Agencement selon l'une des revendications 12 à 15, **caractérisé en ce que** la pompe verticale est une pompe semi-axiale (136).
